(19) Europäisches Patentamt
European Patent Office
Office européen des brevets

(11) EP 2 636 705 B1

(12) **EUROPEAN PATENT SPECIFICATION**

(45) Date of publication and mention of the grant of the patent:
**19.12.2018 Bulletin 2018/51**

(51) Int Cl.:
***C08L 83/04*** *(2006.01)* ***C09J 183/04*** *(2006.01)*
***B32B 27/28*** *(2006.01)* ***C08J 3/28*** *(2006.01)*

(21) Application number: **12198061.9**

(22) Date of filing: **29.10.2009**

(54) **Electron beam cured, nonfunctionalized silicone pressure sensitive adhesives**

Mit Elektronenstrahl gehärtete Haftklebemittel aus nichtfunktionalisiertem Silikon

Adhésifs sensibles à la pression de silicone non-fonctionnalisée, durci par faisceau d'électrons

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **29.10.2008 US 109211 P**

(43) Date of publication of application:
**11.09.2013 Bulletin 2013/37**

(62) Document number(s) of the earlier application(s) in accordance with Art. 76 EPC:
**09744575.3 / 2 350 195**

(73) Proprietor: **3M Innovative Properties Company**
**St. Paul, MN 55133-3427 (US)**

(72) Inventors:
- **Liu, Junkang J.**
  **Saint Paul, MN Minnesota 55133-3427 (US)**
- **George, Clayton A.**
  **Saint Paul, MN Minnesota 55133-3427 (US)**

(74) Representative: **Vossius & Partner**
**Patentanwälte Rechtsanwälte mbB**
**Siebertstrasse 3**
**81675 München (DE)**

(56) References cited:
**US-A- 5 248 739**
**US-A1- 2005 136 266**
**US-B1- 6 664 359**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### FIELD

The present disclosure relates to silicone pressure sensitive adhesives. More specifically, the present disclosure describes methods of making pressure sensitive adhesives by electron beam curing nonfunctionalized silicone materials. The present disclosure also describes silicone pressure sensitive adhesives prepared from nonfunctionalized silicone materials that are cured by exposure to electron beam irradiation and articles incorporating such adhesives.

### BACKGROUND

Pressure sensitive adhesives (PSAs) are an important class of materials. Generally, PSAs adhere to a substrate with light pressure (e.g., finger pressure) and typically do not require any post-curing (e.g., heat or radiation) to achieve their maximum bond strength. A wide variety of PSA chemistries are available including, e.g., acrylic, rubber, and silicone based systems. Silicone PSAs can offer one or more of the following useful characteristics: adhesion to low surface energy surfaces, quick adhesion with short dwell times, wide use temperature (i.e., performance at high and low temperature extremes), weathering resistance (including resistance to ultraviolet radiation, oxidation, and humidity), reduced sensitivity to stress variations (e.g., mode, frequency and angle of applied stresses), and resistance to chemicals (e.g., solve ts and plasticizers) and biological substances (e.g., mold and fungi).

Generally, silicone pressure sensitive adhesives have been formed by a condensation reaction between a polymer or gum and a tackifying resin. The polymer or gum is typically a high molecular weight silanol-terminated poly(diorganosiloxane) material e.g., silanol-terminated poly(dimethylsiloxane) ("PDMS") or poly(dimethylmethylphenylsiloxane). The tackifying resin is typically a three-dimensional silicate structure end-capped with trimethylsiloxy groups. In addition to the terminal silanol groups of the polymer or gum, the tackifying resin may also include residual silanol functionality.

Such systems rely on high molecular weight starting materials; thus, they must be diluted in solvents to achieve viscosities suitable for coating at room temperature. Typical coatable solutions contain less than 60% solids by weigh in a solvent (e.g., an aromatic solvent such as toluene or xylene). Additional solvent may be added prior to coating such that volatile organic compound (VOC) contents of greater than 50% are common when using traditional silicone PSAs.

A number of approaches have been investigated for the low VOC delivery of silicone PSAs. For example, water-based emulsion systems and liquid solventless systems using reactive diluents (i.e., low molecular weight molecules with reactive groups) have been explored. Hot-melt formulations, which are typically not cured, have also been attempted.

Despite these advances, there is still a need for more robust methods for the low VOC delivery of silicone PSAs. There is also a need for low VOC delivery processes that allow for a greater diversity of silicone chemistries to be used, thus enabling a broader range of end-use performance properties.

While some silicone PSA formulations provide acceptable performance after solvent removal, some systems benefit from additional crosslinking. Conventional silicone PSAs have been cured by thermal processes using specific types of catalysts. For example, platinum catalysts have been used with addition cure systems, peroxides (e.g., benzoyl peroxide) have been used with hydrogen-abstraction cure systems, and tin catalysts have been used with moisture/condensation cure systems.

Some of these approaches require a significant number of reactive functional groups attached to the siloxane backbone. For example, addition-cure, platinum-catalyzed systems generally rely on a hydrosilation reaction between silicon-bonded vinyl functional groups and silicon-bonded hydrogens. In general, it may be desirable to have silicone adhesive systems that do not require the presence of specific functional groups to achieve cross-linking, e.g., where the presence of those groups may interfere with desired end-use properties and limit the ultimate applicability of the PSA.

### SUMMARY

Briefly, in one aspect, the present disclosure provides methods of making a crosslinked silicone pressure sensitive adhesive as defined in claims 1 to 7.

In some embodiments, one or more of the nonfunctionalized polysiloxanes may be halogenated, e.g., fluorinated. In some embodiments, at least one of the nonfunctionalized polysiloxanes is a poly(dialkyl siloxane); e.g., a poly(dimethyl siloxane). In some embodiments, at least one of the nonfunctionalized polysiloxanes is an aromatic siloxane.

In some embodiments, the composition is substantially free of catalysts and initiators. In some embodiments, the composition further comprises a tackifier, e.g., an MQ resin. In some embodiments, the composition comprises less than 10% by weight of a functional silicone.

In another aspect, the present disclosure provides crosslinked silicone pressure sensitive adhesives. Such adhesives can be made according to any of the methods set forth in the present disclosure.

In yet another aspect, the present disclosure provides a tape comprising first adhesive bonded to a first major surface of a substrate. The first adhesive can comprise any one or more of the E-beam crosslinked silicone pressure sensitive adhesives disclosed herein. In some embodiments, the substrate comprises a foam. In some embodiments, the substrate comprises a polymeric film. In some embodiments, the tape further comprises a second adhesive bonded to a second major surface of the substrate. In some embodiments, the second adhesive may also comprise any one or more of the E-beam crosslinked silicone pressure sensitive adhesives disclosed herein.

The above summary of the present disclosure is not intended to describe each embodiment of the present invention. The details of one or more embodiments of the invention are also set forth in the description below. Other features, objects, and advantages of the invention will be apparent from the description and from the claims.

## BRIEF DESCRIPTION OF THE DRAWINGS

Figure 1 illustrates an exemplary foam core tape according to some embodiments of the present disclosure.

Figure 2 illustrates an exemplary crosslinked polysiloxane foam according to some embodiments of the present disclosure.

## DETAILED DESCRIPTION

Generally, the silicone pressure sensitive adhesives of the present disclosure are formed from nonfunctionalized silicone materials. The nonfunctionalized silicone materials are low molecular weight silicone oils.

The nonfunctionalized silicone materials are a linear material described by the following formula illustrating a siloxane backbone with aliphatic and/or aromatic substituents:

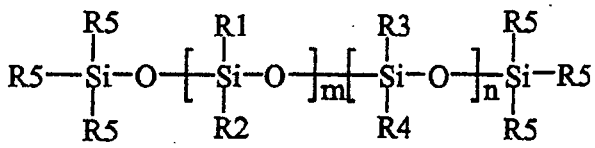

(1)

wherein R1, R2, R3, and R4 are independently selected from the group consisting of an alkyl group and an aryl group, at least 90 % of the R5 are alkyl groups and n and m are integers, and at least one of m or n is not zero. In some embodiments, one or more of the alkyl or aryl groups may contain a halogen substituent, e.g., fluorine. For example, in some embodiments, one or more of the alkyl groups may be $-CH_2CH_2C_4F_9$.

In some embodiments, R5 is a methyl group, i.e., the nonfunctionalized silicone material is terminated by trimethylsiloxy groups. In some embodiments, R1 and R2 are alkyl groups and n is zero, i.e., the material is a poly(dialkylsiloxane). In some embodiments, the alkyl group is a methyl group, i.e., poly(dimethylsiloxane) ("PDMS"). In some embodiments, R1 is an alkyl group, R2 is an aryl group, and n is zero, i.e., the material is a poly(alkylarylsiloxane). In some embodiments, R1 is methyl group and R2 is a phenyl group, i.e., the material is poly(methylphenylsiloxane). In some embodiments, R1 and R2 are alkyl groups and R3 and R4 are aryl groups, i.e., the material is a poly(dialkyldiarylsiloxane). In some embodiments, R1 and R2 are methyl groups, and R3 and R4 are phenyl groups, i.e., the material is poly(dimethyldiphenylsiloxane).

In some embodiments, the nonfunctionalized silicone materials may be branched. For example, referring to formula (1), one or more of the R1, R2, R3, and/or R4 groups may be a linear or branched siloxane with alkyl or aryl (including halogenated alkyl or aryl) substituents and terminal R5 groups.

In contrast to previous silicone adhesive systems, the presence of specific functional groups attached to the siloxane backbone of the starting material (for example, hydride, hydroxyl, vinyl, allyl, or acrylic groups) is not required to obtain the crosslinked siloxane networks of the present disclosure. However, in the normal course of producing nonfunctionalized silicone materials, residual functional groups, particularly hydride and hydroxy groups may remain in the terminal positions (i.e., as R5 groups). Therefore, as used herein, a "nonfunctionalized silicone material" is one in which the R1, R2, R3, and R4 groups are nonfunctional groups, and at least 90% of the R5 groups are nonfunctional groups. In some embodiments, a nonfunctionalized silicone material is one is which at least 98%, e.g., at least 99%, of the R5 groups are nonfunctional groups. As used herein, "nonfunctional groups" are either alkyl or aryl groups consisting of carbon, hydrogen, and in some embodiments, halogen (e.g., fluorine), atoms.

Generally, lower molecular weight, lower viscosity materials are referred to as fluids or oils, while higher molecular weight, higher viscosity materials are referred to as gums; however, there is no sharp distinction between these terms. As used herein, the terms "fluid" and "oil" refer to materials having a dynamic viscosity at 25 °C of no greater than 1,000,000 mPa•sec (e.g., less than 600,000 mPa•sec), while materials having a dynamic viscosity at 25 °C of greater than 1,000,000 mPa•sec (e.g., at least 10,000,000 mPa•sec) will be referred to as "gums".

The pressure sensitive adhesives of the present disclosure may be prepared by combining nonfunctionalized silicone materials with an appropriate tackifying resin, hot melt coating the resulting combination, and curing using electron beam (E-beam) irradiation. Generally, any known additives useful in the formulation of pressure sensitive adhesives (e.g., dyes, pigments, fillers, flame retardants, microspheres (e.g., expandable microspheres), and the like may be also be included.

Generally, any known tackifying resin may be used, e.g., in some embodiments, silicate tackifying resins may be used. In some exemplary adhesive compositions, a plurality of silicate tackifying resins can be used to achieve desired performance.

Suitable silicate tackifying resins include those resins composed of the following structural units M (i.e., monovalent $R'_3SiO_{1/2}$ units), D (i.e., divalent $R'_2SiO_{2/2}$ units), T (i.e., trivalent $R'SiO_{3/2}$ units), and Q (i.e., quaternary $SiO_{4/2}$ units), and combinations thereof. Typical exemplary silicate resins include MQ silicate tackifying resins, MQD silicate tackifying resins, and MQT silicate tackifying resins. These silicate tackifying resins usually have a number average molecular weight in the range of 100 to 50,000-gm/mole, e.g., 500 to 15,000 gm/mole and generally R' groups are methyl groups.

MQ silicate tackifying resins are copolymeric resins where each M unit is bonded to a Q unit, and each Q unit is bonded to at least one other Q unit. Some of the Q units are bonded to only other Q units. However, some Q units are bonded to hydroxyl radicals resulting in $HOSiO_{3/2}$ units (i.e., "$T^{OH}$" units), thereby accounting for some silicon-bonded hydroxyl content of the silicate tackifying resin.

The level of silicon bonded hydroxyl groups (i.e., silanol) on the MQ resin may be reduced to no greater than 1.5 weight percent, no greater than 1.2 weight percent, no greater than 1.0 weight percent, or no greater than 0.8 weight percent based on the weight of the silicate tackifying resin. This may be accomplished, for example, by reacting hexamethyldisilazane with the silicate tackifying resin. Such a reaction may be catalyzed, for example, with trifluoroacetic acid. Alternatively, trimethylchlorosilane or trimethylsilylacetamide may be reacted with the silicate tackifying resin, a catalyst not being necessary in this case.

MQD silicone tackifying resins are terpolymers having M, Q and D units). In some embodiments, some of the methyl R' groups of the D units can be replaced with vinyl (CH2=CH-) groups ("$D^{Vi}$" units). MQT silicate tackifying resins are terpolymers having M, Q and T units.

Suitable silicate tackifying resins are commercially available from sources such as Dow Corning (e.g., DC 2-7066), Momentive Performance Materials (e.g., SR545 and SR1000), Wacker Chemie AG (e.g., WACKER-BELSIL TMS-803), and Rhodia Silicones.

Although not required, in some embodiments, any of various known additives may be included. Exemplary additives include crosslinkers, catalysts, anchorage-enhancers, dyes, pigments, fillers, rheology modifiers, flame retardants, flow additives, surfactants, microspheres (e.g., expandable microspheres), and the like.

The nonfunctionalized silicone material, the tackifying resin, and any optional additives may be combined using any of a wide variety of known means prior to being hot melt coated and cured. For example, in some embodiments, the various components may be pre-blended using common equipment such as mixers, blenders, mills, extruders, and the like. In some embodiments, the hot melt coating process comprises extrusion. In such embodiments, the various components may be added together, in various combinations or individually, through one or more separate ports of an extruder, blended (e.g., melt mixed) within the extruder, and extruded to form the hot melt coated composition.

Regardless of how it is formed, the hot melt coated composition is cured through exposure to E-beam irradiation. A variety of procedures for E-beam curing are well-known. The cure depends on the specific equipment used to deliver the electron beam, and those skilled in the art can define a dose calibration model for the equipment used.

Commercially available electron beam generating equipment are readily available. For the examples described herein, the radiation processing was performed on a Model CB-300 electron beam generating apparatus (available from Energy Sciences, Inc. (Wilmington, MA). Generally, a support film (e.g., polyester terephthalate support film) runs through an inert chamber. In some embodiments, a sample of uncured material with a liner (e.g., a fluorosilicone release liner) on both sides ("closed face") may be attached to the support film and conveyed at a fixed speed of about 6.1 meters/min (20 feet/min). In some embodiments, a sample of the uncured material may be applied to one liner, with no liner on the opposite surface ("open face").

The uncured material may be exposed to E-beam irradiation from one side through the release liner. For making a single layer laminating adhesive type tape, a single pass through the electron beam equipment may be sufficient. Thicker samples, such as a foam tape, may exhibit a cure gradient through the cross section of the tape so that it may be desirable to expose the uncured material to electron beam radiation from both sides.

In contrast to previous methods for curing silicone materials, the methods of the present disclosure do not

require the use of catalysts or initiators. Thus, the methods of the present disclosure can be used to cure compositions that are "substantially free" of such catalysts or initiators. As used herein, a composition is "substantially free of catalysts and initiators" if the composition does not include an "effective amount" of a catalyst or initiator. As is well understood, an "effective amount" of a catalyst or initiator depends on a variety of factors including the type of catalyst or initiator, the composition of the curable material, and the curing method (e.g., thermal cure, UV-cure, and the like). In some embodiments, a particular catalyst or initiator is not present at an "effective amount" if the amount of catalyst or initiator does not reduce the cure time of the composition by at least 10% relative to the cure time for same composition at the same curing conditions, absent that catalyst or initiator.

In the following, some embodiments are summarized:

1. A method of making a crosslinked silicone pressure sensitive adhesive comprising applying a composition comprising a nonfunctionalized polysiloxane material as defined in claim 1 to a substrate and crosslinking the nonfunctionalized polysiloxane by exposing the composition to electron beam irradiation.

3. The method of item 1, wherein applying comprises hot melt coating.

4. The method according to any one of the preceding items, wherein the composition comprises a plurality of nonfunctionalized polysiloxane gums.

5. The method according to any one of the preceding items, wherein the composition comprises a nonfunctionalized polysiloxane fluid having a dynamic viscosity of less than 600,000 mPa•sec at 25 °C.

6. The method according to any one of the preceding items, wherein at least one of the nonfunctionalized polysiloxane materials comprises fluorine.

7. The method according to any one of the preceding items, wherein at least one of the nonfunctionalized polysiloxane materials is a poly(dimethyl siloxane).

8. The method according to anyone of the preceding items, wherein at least one of the nonfunctionalized polysiloxane materials is an aromatic siloxane.

9. The method according to any one of the preceding items, wherein the composition is substantially free of catalysts and initiators.

10. The method according to any one of the preceding items, wherein the composition further comprises an MQ resin tackifier.

11. The method according to any one of the preceding items, wherein the composition comprises less than 10% by weight of a functional silicone.

12. The method according to any one of the preceding items wherein the composition further comprises at least one of glass beads and polymeric microspheres.

13. A silicone pressure sensitive adhesive made according to any one of the preceding items.

14. A silicone pressure sensitive adhesive comprising an electron beam crosslinked composition, wherein the composition comprises at least one crosslinked nonfunctionalized polysiloxane material.

15. The silicone pressure sensitive adhesive according to item 13, wherein the composition is substantially free of catalysts and initiators.

16. The silicone pressure sensitive adhesive according to any one of items 13 and 14 further comprising at least one of glass beads and polymeric microspheres.

17. The silicone pressure sensitive adhesive according to any one of items 13 to 16, wherein the adhesive has a wet-out time to glass of no greater than 10 seconds as measured according to the Glass Wet-Out Procedure.

18. An adhesive article comprising first adhesive bonded to a first major surface of a substrate, wherein the first

adhesive comprises the silicone pressure sensitive adhesive according to any one of items 13 to 17.

19. The adhesive article of item 18 wherein the substrate comprises a foam.

20. The adhesive article of item 18, wherein the substrate and the adhesive are optically clear.

Test Methods

Solvent Swelling Test. A one gram sample of material was added to ten grams of toluene in a glass vial. The sample was shaken for two minutes and left standing at room temperature for four days. The resulting solution was then visually inspected to determine if there was any undissolved gel. The solutions were then filtered and the undissolved materials were separated and dried in aluminum pans. The extractable content for each sample was calculated based on dry weight according to the following equation:

$$\text{Percent Extractable} = 100^* \frac{(\text{Weight of the sample} - \text{Weight of the undissolved material})}{\text{Weight of sample}}$$

Peel Test. Peel adhesion was measured using an INSTRON Tensile Tester. The adhesive sample was slit to a width of 1.27 cm and length of 11.4 cm and laminated to 0.127 mm thick and 1.6 cm wide aluminum foil backing using one of the major surfaces of the adhesive. The resulting tape was then applied to a clean panel using four total passes of a 2 kg (4.5 1b) hard rubber roller. The sample was aged before testing for either (1) 3 days at room temperature (22 °C) and 50% relative humidity or (2) 20 minutes at room temperature (22 °C) and 50% relative humidity. The panel was then mounted in an INSTRON Tensile Tester and the tape was pulled off at a 90 degree angle at a speed of 30.5 cm per minute. Results were measured in pounds force per 0.5 inch, and converted to N/cm (i.e., 3.5 N/cm = 1 lbf/0.5 inch).

Shear Test. A sample of tape measuring 2.54 cm by 1.27 cm was laminated to a panel measuring 2.54 cm by 5.08 cm such that the tape edges were coextensive with edges of the panels. The panel overlapped 1.27 cm to cover the tape and the free ends of the panels extended in opposite directions. One end of a panel was hung on a rack in an oven set at 70 °C with a 500 gram weight hanging from the bottom of the end of the other panel so that the tape sample was under shear stress. The time for the bottom panel to release from the hanging panel was monitored for up to 10,000 minutes. Time to failure in minutes was recorded. For samples that survived for 10,000 minutes, the test was stopped and a value of "10,000+" was recorded.

The Peel Test and Shear Test were conducted using both polypropylene panels and painted panels. The polypropylene panels were obtained from Standard Plaque Inc. (Melvindale, MI). The painted panels were identified as APR46336 from ACT (Hilldale, MI). As received, these painted panels had been prepared using a typical automotive paint system. The automotive paint system comprised a base electrocoat, a pigmented base coat, and a low surface energy carbamate crosslinked unpigmented acrylic-based clear coat was applied to a stainless steel panel. The resulting test surface had a surface energy of 32 dynes/cm as measured using "Accu-Dyne" solutions.

Examples

For the examples described herein, radiation processing was performed on a Model CB-300 electron beam generating apparatus (available from Energy Sciences, Inc. (Wilmington, MA) equipped with a 0.076 mm (0.003 inch) thick, 30.48 cm (12 inch) wide polyester terephthalate support film running through an inert chamber. A sample of material with a polyester release liner on both sides (i.e., a closed-face construction) was taped onto the support film and conveyed at a speed of about 6.1 meters/min (20 feet/min) such that the tape was treated from one side through the polyester release liner. The oxygen level within the electron beam chamber was restricted to a range of 50 to 100 ppm. The standard nitrogen gap between the window and the web path was 47 mm. The accelerating voltage and electron beam dose are reported for each example.

Prior to treating samples, the electron beam apparatus was calibrated according to ASTM E 1818 with dosimetry using 10 micron and 45 micron dosimeters, which are polymeric films containing radiochromic dye, commercially available from Far West Technologies, Inc. (Goleta, CA). The calibration provided a measure of surface dose and a dose/depth profile as a function of accelerating voltage and beam current. The actual sample dose is the energy deposited into a square centimeter of substrate divided by the density of the sample, so the dose-depth profile for substrates having different densities than the dosimeters were normalized. A dose-depth profile was calculated for each tape construction (which typically has a liner, a foam core of a specific composition, and optional skin layers of specific compositions on the foam core or a single layer of skin adhesive with two liners on each side) to account for the differences in densities

of the different layers that the electron beam must penetrate to reach the center of the tape.

Examples 1-5 illustrate the effect electron beam (E-beam) irradiation has on nonfunctionalized silicone materials. As summarized in Table 1, five nonfunctionalized silicone materials varying by molecular weight and kinematic viscosity were obtained from Gelest, Inc. (Morrisvile, PA) and are identified by their trade names. Each material was a poly(dimethylsiloxane) (PDMS), specifically, a trimethylsiloxy-terminated poly(dimethylsiloxane).

E-beam cured samples were prepared by coating each nonfunctionalized silicone material onto a fluorosilicone release liner using a knife coater with a 76 micron (3 mil) gap. The coated samples were E-beam cured using an acceleration voltage of 250 kev and a dose of 9 Mrads in an atmosphere containing less than 50 ppm oxygen.

The resulting samples were subjected to the Solvent Swelling Test. The observed gelling behavior and percent extractable material for each E-beam cured sample are summarized in Table 1. For comparison, the gelling behavior and percent extractable material for the uncured nonfunctionalized silicone materials were also determined. Each of the uncured materials dissolved, yielding 100% extractable material.

Table 1: Examples 1-5.

| Ex. | Nonfunctionalized silicone material | Properties | | E-beam cured sample | |
|---|---|---|---|---|---|
| | | Dynamic viscosity (mPa•sec) | MW (a) | Observation | % Extractable |
| 1 | DMS-T51 | 97,700 | 140,000 | dissolved | 100 |
| 2 | DMS-T56 | 587,000 | 260,000 | swollen gel | 0 |
| 3 | DMS-T61 | 978,000 | 310,000 | swollen gel | 0 |
| 4* | DMS-T63 | 2,445,000 | 423,000 | swollen gel | 0 |
| 5* | DMS-T72 | 19,580,000 | > 500,000 | swollen gel | 0 |

(a) Molecular weight as reported by the manufacturer. Stated to be derived from kinematic viscosity measurements and to correlate to number average molecular-weight.
* not within the claims

Examples 6-11 illustrate the use of E-beam cured, nonfunctionalized silicone materials in the formation of pressure sensitive adhesives. Descriptions of the materials, identified by their trade names, are provided in Table 2.

Table 2: Description of nonfunctionalized silicone materials.

| Ex. | Nonfunctionalized silicone material | description | Dynamic viscosity (mPa•sec) | Source |
|---|---|---|---|---|
| 6 | AK 500000 | PDMS | 485,000 | Wacker Chemie AG |
| 7 | DMS-T56 | PDMS | 587,000 | Gelest, Inc. |
| 8 | DMS-T61 | PDMS | 978,000 | Gelest, Inc. |
| 9* | DMS-T63 | PDMS | 2,445,000 | Gelest, Inc. |
| 10* | DMS-T72 | PDMS | 19,580,000 | Gelest, Inc. |
| 11* | EL Polymer NA | PDMS | N/A (b) | Wacker Chemie AG |

(b) No reported kinematic viscosity; however, this material was a high viscosity gum.
* not within the claims

Cured adhesive samples were prepared by mixing each nonfunctionalized silicone material with WACKER-BESIL TMS-803 MQ tackifying resin (obtained from Wacker Chemie AG) at a 50/50 weight ratio. The silicone materials were pressed using heat and pressure between two fluorosilicone liners to achieve 50 micron (2 mil) dry thickness. The silicone materials were then irradiated between these two liners (closed faced) while supported by the fluorosilicone liner. These laminates were E-beam irradiated at the specified dosage condition (under a nitrogen atmosphere with less than 50 ppm of oxygen). Samples were exposed to e-beam doses of 3 to 18 Mrads. The cured samples were then subjected to the Peel Test using the painted panels. The results are shown in Table 3.

Table 3: Peel force (N/cm) from painted panels.

| Example | 3 Mrad | 6 Mrad | 9 Mrad | 12 Mrad | 15 Mrad | 18 Mrad |
|---|---|---|---|---|---|---|
| Ex. 6 | -- | 3.5 | 2.4 | -- | -- | -- |
| Ex. 7 | -- | 2.5 | 2.7 | -- | -- | -- |
| Ex. 8 | -- | 3.6 | 3.0 | -- | -- | -- |
| Ex: 9 * | 3.3 | 3.0 | 5.4 | 4.1 | 3.1 | 3.1 |
| Ex. 10* | 4.0 | 5.4 | 4.6 | 3.9 | -- | -- |
| Ex.11* | -- | 7.4 | 5.3 | 5.4 | 5.5 | -- |
| * not within the claims | | | | | | |

Shear and peel properties over a range of E-beam doses were evaluated using compositions based on a high molecular weight (high viscosity) nonfunctionalized PDMS gum (EL Polymer NA) and an MQ tackifying resin (WACKER-BESIL TMS-803), both of which were obtained from Wacker Chemie AG. Examples 12-17 illustrate the effects of varying the amount of a low molecular weight (low viscosity) nonfunctionalized silicone oil (AK 500000 from Wacker Chemie AG) with a corresponding reduction in the relative amount of either the PDMS gum or the MQ tackifying resin. The adhesive compositions are summarized in Table 4.

Table 4: Adhesive compositions.

| | Weight percent | | |
|---|---|---|---|
| Example | EL Polymer | AK 500000 | TMS-803 |
| Ex. 12* | 40 | 0 | 60 |
| Ex. 13 | 30 | 10 | 60 |
| Ex. 14 | 25 | 15 | 60 |
| Ex. 15 | 20 | 20 | 60 |
| Ex. 16 | 40 | 10 | 50 |
| Ex. 17 | 30 | 20 | 50 |
| * not within the claims | | | |

The samples were subjected to the Peel Test using polypropylene panels (Table 5a) and painted panels (Table 5b).

Table 5a: Peel force (N/cm) from polypropylene panels.

| Example | 6 Mrad | 9 Mrad | 12 Mrad | 15 Mrad |
|---|---|---|---|---|
| Ex. 12* | 5.9 | 4.2 | 4.4 | 3.1 |
| Ex. 13 | 6.4 | 4.9 | 5.1 | 3.7 |
| Ex.14 | 6.7 | 5.0 | 4.8 | 4.7 |
| Ex. 15 | 5.9 | 4.1 | 3.6 | 3.7 |
| Ex. 16 | 3.9 | 2.0 | 2.7 | 2.7 |
| Ex.17 | 3.1 | 2.7 | 2.0 | 1.4 |
| * not within the claims | | | | |

Table 5b: Peel force (N/cm) from painted panels.

| Example | 6 Mrad | 9 Mrad | 12 Mrad | 15 Mrad |
|---|---|---|---|---|
| Ex. 12* | 8.2 | 7.2 | 7.0 | 6.8 |
| Ex, 13 | 9.5 | 10.5 | 7.5 | 8.9 |
| Ex. 14 | 7.7 | 6.9 | 7.3 | 8.8 |
| Ex. 15 | 6.0 | 6.1 | 6.1 | 5.3 |
| Ex. 16 | 4.5 | 4.1 | 4.9 | 4.7 |
| Ex. 17 | 3.7 | 4.7 | 3.5 | 3.5 |
| * not within the claims | | | | |

Examples 18-20 illustrate the effects of including a low viscosity poly(alkylaryl) siloxane nonfunctionalized silicone oil (polymethylphenyl siloxane ("PMPS", # 801; (CAS Number 63148-58-3), available from Scientific Polymer Products, Inc., Ontario, New York) with a high viscosity nonfunctionalized silicone polymer (EL Polymer) and an MQ tackifier (TMS-803). The PMPS material had a molecular weight of about 2600 and viscosity of 500 cs. The adhesive compositions are summarized in Table 6.

Table 6: Adhesive compositions including a polymethylphenyl siloxane.

| | Weight percent | | |
|---|---|---|---|
| Example | EL Polymer | PMPS | TMS803 |
| Ex. 18 | 35 | 5 | 60 |
| Ex. 19 | 30 | 10 | 60 |
| Ex. 20 | 40 | 10 | 50 |

The samples were E-beam cured at various dosages and subjected to the Peel Test using polypropylene panels and painted panels (see Table 7a). The cured samples were also subjected to the Shear Test using polypropylene panels and painted panels (Table 7b).

Table 7a: Peel adhesion (N/cm) for Example 18, 19 and 20.

| E-beam Dose | Polypropylene Panel | | | Painted Panel | | |
|---|---|---|---|---|---|---|
| | Ex. 18 | Ex. 19 | Ex. 20 | Ex. 18 | Ex. 19 | Ex. 20 |
| 6 Mrad | 6.0 | 5.0 | 2.7 | 7.8 | 5.9 | 5.3 |
| 9 Mrad | 5.7 | 2.2 | 2.8 | 7.3 | 7.1 | 5.5 |
| 12 Mrad | 4.5 | 3.2 | 2.1 | 6.9 | 5.7 | 4.4 |
| 15 Mrad | 2.8 | 2.4 | 2.6 | 5.8 | 6.1 | 4.5 |

Table 7b: Shear (minutes) for Examples 18, 19, and 20.

| E-beam Dose | Polypropylene Panel | | | Painted Panel | | |
|---|---|---|---|---|---|---|
| | Ex. 18 | Ex. 19 | Ex. 20 | Ex. 18 | Ex. 19 | Ex. 20 |
| 6 Mrad | 362 | -- | -- | 739 | -- | -- |
| 9 Mrad | 488 | 19 | 3 | 1240 | 380 | 43 |
| 12 Mrad | 6836 | 116 | 19 | 10000+ | 1216 | 10000+ |
| 15 Mrad | 132 | 38 | < 1 | 10000+ | 278 | 800 |

In some embodiments, silicone PSAs of the present disclosure may be useful as the skin adhesive layers of a foam core tape. An exemplary foam core tape is shown in **the Figure.** Tape **10** includes foam core **20** and silicone PSA layer **30.** Optional primer layer **40** is interposed between the PSA layer and the foam core. In some embodiments, second adhesive layer **50** may be adhered to the opposing surface of foam core **20.** Again, in some embodiments, a primer layer may be used to aid in bonding the adhesive layer to the foam core or, as shown in **Fig. 1,** adhesive layer **50** may be bonded directly to the foam core **20.** In addition to foam core tapes, in some embodiments, the silicone PSAs of the present disclosure may be used as free films, either with or without an internal support, e.g., a scrim.

Exemplary foam cores comprise one or more of acrylates, silicones, polyolefins, polyurethanes, and rubbers (e.g., block copolymers). These materials may be foamed by any known technique, e.g., inclusion of spheres (e.g., glass and polymeric microspheres, including expandable microspheres), frothing, using chemical blowing agents, and the like. In some embodiments, the foam core (e.g., a silicone foam core) may be E-beam cured separately, or in the same step as, the silicone PSA.

The silicone PSAs may be used as part of other single-coated and double-coated tape construction as well, i.e., bonded directly or indirectly to a support layer, e.g., a paper, polymeric film (e.g., fluorinated polymers such as polytetrafluoroethylene or urethane polymers), or a metal foil.

Foam core tape samples using the adhesive compositions of Examples 12-17 and 18-20 were prepared as follows. The silicone materials were pressed using heat and pressure between two fluorosilicone liners to achieve 50 micron (2 mil) dry thickness. The silicone materials were then irradiated between these two liners (closed faced) while supported by the fluorosilicone liner. These laminates were E-beam irradiated at the specified dosage condition (under a nitrogen atmosphere with less than 50 ppm of oxygen). After the exposure, one liner was removed and laminated to one side of ACRYLIC FOAM TAPE 5666 (a self stick tape having an acrylic foam core available from 3M Company, St. Paul, MN) using a rubber backed roller and hand pressure. The E-beam units were broadband curtain type electron beam processors (PCT Engineered Systems, LLC, Davenport, IA).

The peel adhesion of the silicone skin adhesives of the resulting foam core tapes was measured using the painted panels. The results are summarized in Table 8.

Table 8: Peel adhesion (N/cm) from painted panels of foam core tapes.

| Adhesive | 6 Mrad | 9 Mrad | 12 Mrad | 15 Mrad |
|---|---|---|---|---|
| Ex. 12* | 22.6 | 26.8 | 24.4 | 29.6 |
| Ex. 13 | 23.6 | 23.4 | 25.5 | 29.8 |
| Ex. 14 | 22.4 | 23.6 | 24.8 | 27.5 |
| Ex. 15 | 14.8 | 16.0 | 19.8 | 17.9 |
| Ex. 16 | 10.6 | 10.9 | 12.6 | 12.1 |
| Ex. 17 | 7.5 | 8.4 | 10.8 | 10.0 |
| Ex. 18 | 28.6 | 29.4 | 27.0 | 27.5 |
| Ex. 19 | 32.0 | 26.6 | 21.3 | 30.2 |
| Ex. 20 | 10.6 | 12.3 | 12.1 | 16.6 |
| * not within the claims | | | | |

Although the methods and products described above relate to pressure sensitive adhesives, similar methods may be used to produce non-pressure sensitive materials from non-functionalized silicone materials. Such materials having a, E-beam crosslinked polysiloxane network include films and coatings.

The e-beam cured, nonfunctional silicone adhesives of the present disclosure may be used in a wide variety of applications, including those where silicone adhesives provide particular advantages such as high and low temperature applications.

Easy to install protection films are frequently needed to prevent delicate surfaces from abusive and use damages such as, scratches and smudges. Many adhesive backed clear films have been used for such applications. However, the adhesives used in these applications have unique requirements. They should apply easily, without the need for special tools or process steps to yield a smooth, bubble free interface between the adhesive and the protected surface. The adhesive should also form an adequate bond to the protected surface. In some cases, it can be desirable to have little or no adhesive build over time so that the adhesively bonded protective layer can be cleanly and easily removed from the underlying surface it is intended to protect. For example, when one protective film is damaged, it can be desirable

to simply remove and replace that proactive film. Finally, it is frequently desirable that the protective article, e.g., the protective film and the adhesive be optically clear (i.e., the materials transmit at least 97% of incident light in the visible spectrum).

The common practice for easy but defect free installation includes using water/isopropyl alcohol activated dry adhesives (such as those used in paint protection films) to aid in bubble and wrinkle free application. However, special solutions and equipment, e.g., a squeegee are required. Alternatively, structured adhesives have been used to create an air path between the adhesive and the underlying surface to achieve air bleeding and prevent air accumulation at the interface. However, the structure in the adhesive can lead to undesirable optical effects. Neither of these approaches is ideal for screen protectors for delicate LCD displays, especially touch sensitive LCD displays.

Recently, self wetting adhesives, which virtually self apply by spontaneously wetting-out onto smooth surfaces, are being developed for protection films, especially for screen protectors. The self wetting adhesives have been made from non-tacky elastomers. Surprisingly, the present inventors have discovered that, in some embodiments, the silicone adhesives of the present disclosure may be used in self-wetting applications. Self-Wetting Adhesive. Examples

Example SW-1 (not within the claims). 50 g of EL Polymer NA (from Wacker Chemie, AG) were added to 100 g of toluene in a glass jar. The jar was sealed and put on a roller for 24 hours. The solution was coated on various films via a knife coater (to what thickness). The films were antireflective films with various thicknesses of a hard coat (HC) made according to the method described in WO2009/076389 (Hao, published June 18, 2009). ("SW-1 on glossy or matte AR film"). The coated films were dried at 70 °C for 15 minutes. The dried samples were then E-beam cured in an open-face condition under a nitrogen atmosphere (< 100 ppm oxygen) at an acceleration voltage of 300 keV and a dose of 8 MRads.

A peel adhesion test similar to the test method described in ASTM3330-90, except substituting a glass substrate for the stainless steel substrate was performed. The cured adhesive films were cut into 1.27 centimeter by 15.2 centimeter strips. Each strip was then adhered to a 10 centimeter by 20 centimeter clean, solvent washed glass coupon using a 2-kilogram roller passed once over the strip. The bonded assembly dwelled at room temperature for a week (7d-RT) and at 70 °C for a week (7d-HT). The samples were tested for 180 degree peel adhesion using IMASS slip/peel tester (Model3M90, commercially available from Instrumentors Inc. Stronggville, Ohio) at a rate of 0.30 meters / minute (12 inch / minute) over a 10 second data collection time. Three samples were tested. The reported peel adhesion value is the average of the peel adhesion value from each of the three samples.

Wet-out Test Procedure. The cured adhesive films were cut into 2.54 centimeter wide and 10.16 centimeter long and were tested for ease of lamination by self laminating to a glass substrate. One end of the strip was bonded to the glass using finger pressure and the rest of 10.16 centimeter long film was allowed to drape down onto the glass substrate. Upon contact with the glass, the adhesive began self-wetting (i.e., displacing air and bonding to the glass) the substrate. The wet-out time was recorded as the time required for the entire 10.16 centimeter long film adhesive to wet-out to the glass substrate resulting in less than 10% area having entrapped air bubbles.

The results are summarized in Table 9, along with the results for several commercially available products.

Table 9: Wet-out time and peel adhesion to glass for Example SW-1.

| | | Peel adhesion (g/2.5 cm) | |
|---|---|---|---|
| Example | Wet-out (sec.) | 7d-RT | 7d-HT |
| SW-1 on DQC Glossy (3 micron HC) | 5.9 | 18 | 27 |
| SW-1 on DQC Glossy (5 micron HC) | 9.0 | 29 | 29 |
| SW-1 on DQC matte (3 micron HC) | 5.8 | 35 | 44 |
| SW-1 on DQC matte (4 micron HC) | 5.3 | 29 | 33 |
| CE-1 ("SURFACE SHIELD") (a) | 10.4 | 24 | 28 |
| CE-2 ("ROCKET FISH") (b) | 32.5 | 30 | 30 |
| CE-3 ("INVISIBLE SHIELD") (c) | >100 | 628 | 856 |
| (a) From Digital Lifestyle Outfitters<br>(b) From Best Buy, Inc.<br>(c) From Zagg | | | |

The effect of tackifier loading level on wet-out time and peel adhesion to glass was evaluated. Examples of self-wetting adhesives were prepared according to the compositions summarized in Table 10. The samples included varying amounts of PDMS gum (EL Polymer NA) and MQ tackifying resin (TMS-803). For each example, the materials

were added to 100 g of toluene in a glass jar. The jar was sealed and put on a roller for 24 hours. The solution was coated on a film via a knife coater. The coated film was dried at 70 °C for 15 minutes. The dried sample was then E-beam cured at 300 keV and 8 MRads.

Table 10: Compositions of self-wetting adhesives with varying resin to tackifier ratio (not within the claims)

| Ex. | Composition (g) | | Wet-out (sec.) | Peel adhesion (g/2.5 cm) | | |
|---|---|---|---|---|---|---|
| | EL-P-NA (*) | TMS-803 | | Initial | 7d-RT | 7d-HT |
| SW-2 | 45 | 5 | 32.1 | 8 | 56 | 38 |
| SW-3 | 40 | 10 | 30.0 | 4 | 44 | 64 |
| SW-4 | 35 | 15 | 25.5 | 6 | 124 | 317 |
| SW-5 | 30 | 20 | 46.0 | 26 | 300 | 334 |
| (*) EL-P-NA = EL Polymer NA | | | | | | |

The effect of the addition of mineral oil to tackified and untackified adhesives on wet-out time and peel adhesion to glass was evaluated. Examples of self-wetting adhesives were prepared according to the compositions summarized in Table 11. For each example, the materials were added to 100 g of toluene in a glass jar. The jar was sealed and put on a roller for 24 hours. The solution was coated on a film via a knife coater. The coated film was dried at 70 °C for 15 minutes. The dried sample was then E-beam cured at an acceleration voltage of 300 keV and a dose of 6 MRads.

Table 11: Compositions of self-wetting adhesives with varying amounts of mineral oil (not within the claims)

| Example | Composition (g) | | | Wet-out (sec.) | Peel adhesion (g/2.5 cm) | |
|---|---|---|---|---|---|---|
| | EL-P-A | TMS-803 | Mineral Oil | | 7d-RT | 7d-HT |
| SW-6 | 50 | 0 | 0.5 | 4.0 | 27 | 45 |
| SW-7 | 50 | 0 | 1.0 | 3.2 | 28 | 54 |
| SW-8 | 50 | 0 | 2.0 | 2.4 | 9 | 54 |
| SW-9 | 50 | 2.5 | 0.5 | 7.6 | 26 | 36 |
| SW-10 | 50 | 2.5 | 1.0 | 6.2 | 18 | 36 |
| SW-11 | 50 | 2.5 | 2.0 | 3.8 | 9 | 36 |

The effect of E-beam dose on wet-out time was evaluated. Examples of self-wetting adhesives were prepared according to the compositions summarized in Table 12A. For each example, the materials were added to 100 g of toluene in a glass jar. The jar was sealed and put on a roller for 24 hours.

Table 12A: Compositions of self-wetting adhesives (not within the claims)

| Example | Composition (g) | | |
|---|---|---|---|
| | EL-P-A | TMS-803 | Mineral Oil |
| SW-12 | 50 | 10 | 0 |
| SW-13 | 50 | 10 | 10 |
| SW-14 | 50 | 10 | 20 |
| SW-15 | 50 | 20 | 0 |
| SW-16 | 50 | 20 | 10 |
| SW-17 | 50 | 20 | 20 |

The solutions were coated on a film via a knife coater. The coated film was dried at 70 °C for 15 minutes. The dry coated films were E-beam cured at an acceleration voltage of 300 keV and the dosages listed in Table 12B. The wet-out time for each sample was evaluated.

Table 12B: E-beam dose and wet out time (sec.) for self-wetting adhesives (not within the claims)

| Example | E-beam Dose | | | |
|---|---|---|---|---|
| | 2 MRad | 4 MRad | 8 MRad | 16 MRad |
| SW-12 | 7.5 | 7.3 | 4.0 | 6.9 |
| SW-13 | 6.1 | 3.8 | 6.2 | 6.4 |
| SW-14 | 12.3 | 6.2 | 13.2 | 8.2 |
| SW-15 | 11.5 | 4.3 | 7.3 | 7.2 |
| SW-16 | 14.8 | 9.0 | 9.6 | 17.7 |
| SW-17 | 13.1 | 11.3 | 17.9 | 19.2 |

A comparative example was prepared using a functionalized silicone material. Silanol terminated polydimethylsiloxane (obtained from Gelest as DMS-S42) was coated on a film via a knife coater. The coated sample was further E-beam cured at 300 keV and 6 MRads. The cured, functional silicone did not wet out the glass panel after 100 seconds.

The present inventors have also discovered that, in some embodiments, the e-beam cured, nonfunctional silicone materials of the present disclosure can be used to make silicone foams. Silicone foams provide unique properties, including: resilience, wide service temperature stability (e.g., -50 °C to about 200 °C), inertness, and inherent flame retardancy. Generally, silicone foams have been made in processes where cell growth or expansion (i.e., the foaming process) and cell stabilization (i.e., the crosslinking process) happened simultaneously. Most common cell expansion chemistries for silicone foams rely on chemical blowing agents, e.g. azo containing compounds or condensed gas byproduct from crosslinking reactions.

In contrast, through the use of e-beam curing process of the present disclosure, the cell expansion or foaming process and cell stabilization or crosslinking process can be independently optimized. In some embodiments, this can lead to improved control over cell structures with uniform distribution of foam cell sizes. The E-beam cured silicone foams can be made with microspheres, including both rigid non-polymeric hollow microspheres, e.g. glass bubbles and expandable polymeric hollow microspheres.

Foam Examples (not within the claims)

Table 13: Materials used in Examples F-1 through F-12.

| Material | Description | Source |
|---|---|---|
| EL-P-A | EL POLYMER NA High MW PDMS gum | Wacker Chemie, AG |
| TMS-803 | MQ tackifier | Wacker Chemie, AG |
| K-15 | Glass bubbles | 3M Company |
| K-37 | Glass bubbles | 3M Company |
| F100 | expandable microspheres (MICROPEARL F100) | Henkel |
| R972V | silica particles (Aerosil R972V) | Cabot |

Example F-1 was prepared by mixing 20 g of EL POLYMER NA (from Wacker), 3 g of TMS-803 (from Wacker), and 2 g of MICROPEARL F100 expandable microsphere (from Henkel) in a Brabender at 93 °C (200 °F) and 16 RPM. The mixture was then expanded with a hot presser (Carver Laboratory Press) at 204 °C (400 °F). The resulting 1.65 mm (65 mil) thick foam sheet was milky white and self tacky. This foam sheet was then e-beamed at 300 kev and 6 MRads from both sides. The cured, self tacky silicone foam thus made had a density of 9.75 g/in3.

Foam Examples F-2 through F-12 were prepared according to the formulations provided in Tables 14A and 14B. The components were mixed at 2350 RPM for 5 minutes with a speedmixer (DAC 600 FVZ). The mixture was then pressed with a hot presser (Carver Laboratory Press) at 204 °C (400 °F). The resulting 1.5 mm (60 mil) thick foam sheet was milky white. This foam sheet was then e-beamed at 300 kev and 15 MRads from both sides. The resulting foam densities for samples using glass beads are summarized in Table 14A.

Table 14A: Foam compositions and densities for Examples F-2 through F-7 (foam produced by the addition of glass beads).

| | Composition (g) | | | |
|---|---|---|---|---|
| Ex. | EL Polymer NA | K-15 | R972V | Density (g/cc) |
| F-2 | 40 | 3 | 0 | 0.83 |
| F-3 | 40 | 6 | 0 | 0.82 |
| F-4 | 40 | 12 | 0 | 0.86 |
| F-5 | 40 | 6 | 1.67 | 0.87 |
| F-6 | 40 | 6 | 3.33 | 0.89 |
| F-7 | 40 | 6 | 6.67 | 0.91 |

The resulting foam densities for samples using expandable polymeric microspheres are summarized in Table 14B.

Table 14B: Foam compositions and densities for Examples F-8 through F-12 (foam produced with expandable polymeric microspheres).

| | Composition (g) | | | Density (g/cc) |
|---|---|---|---|---|
| Ex. | EL Polymer NA | F-100 | R972V | |
| F-8 | 40 | 6 | -- | 0.40 |
| F-9 | 30 | 9 | -- | 0.18 |
| F-10 | 30 | 9 | 1.25 | 0.18 |
| F-11 | 30 | 9 | 2.50 | 0.17 |
| F-12 | 30 | 9 | 5.00 | 0.21 |

Exemplary crosslinked polysiloxane foam **200** is illustrated in **FIG. 2.** Foam **200** comprises crosslinked polysiloxane material **210** with polymeric microspheres **220** dispersed throughout. Although not shown, glass bubbles could be included along with or in place of the polymeric microspheres.

## Claims

1. A method of making a crosslinked silicone pressure sensitive adhesive comprising
applying a composition comprising a nonfunctionalized polysiloxane material to a substrate and
crosslinking the nonfunctionalized polysiloxane by exposing the composition to electron beam irradiation,
wherein the nonfunctionalized polysiloxane material is a nonfunctionalized polysiloxane oil having a dynamic viscosity of no greater than 1,000,000 mPa•sec at 25 °C, and
wherein the nonfunctionalized polysiloxane material has the following formula:

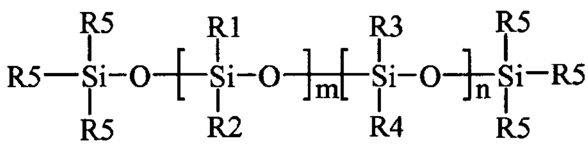

(1)

where R1, R2, R3, and R4 are independently selected from the group consisting of an alkyl group and an aryl group, at least 90% of the R5 groups are alkyl groups, n and m are integers, and at least one of m or n is not zero.

2. The method according to claim 1, wherein the composition comprises a plurality of nonfunctionalized polysiloxane materials.

3. The method according to any one of the preceding claims, wherein the composition comprises a nonfunctionalized polysiloxane oil having a dynamic viscosity of less than 600,000 mPa•sec at 25 °C.

4. The method according to any one of the preceding claims, wherein at least one of the nonfunctionalized polysiloxane materials comprises fluorine.

5. The method according to any one of the preceding claims, wherein at least one of the nonfunctionalized polysiloxane materials is a poly(dimethyl siloxane) or an aromatic siloxane.

6. The method according to any one of the preceding claims, wherein the composition is substantially free of catalysts and initiators, wherein substantially free means that there is no effective amount and an effective amount is an amount that reduces the cure time of the composition by at least 10% relative to the cure time for the same composition at the same curing conditions absent that catalyst or initiator.

7. The method according to any one of the preceding claims wherein the composition further comprises at least one of glass beads and polymeric microspheres.

8. A silicone pressure sensitive adhesive comprising an electron beam crosslinked composition,
wherein the composition comprises at least one crosslinked nonfunctionalized polysiloxane material,
wherein the nonfunctionalized polysiloxane material is a nonfunctionalized polysiloxane oil having a dynamic viscosity of no greater than 1,000,000 mPa•sec at 25 °C, and
wherein the nonfunctionalized polysiloxane material has the following formula:

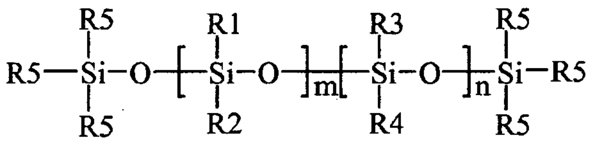

(1)

where R1, R2, R3, and R4 are independently selected from the group consisting of an alkyl group and an aryl group, at least 90% of the R5 groups are alkyl groups, n and m are integers, and at least one of m or n is not zero.

9. The silicone pressure sensitive adhesive according to claim 9, wherein the composition is substantially free of catalysts and initiators, wherein substantially free means that there is no effective amount and an effective amount is an amount that reduces the cure time of the composition by at least 10% relative to the cure time for the same composition at the same curing conditions absent that catalyst or initiator.

10. The silicone pressure sensitive adhesive according to claim 9 further comprising at least one of glass beads and polymeric microspheres.

11. The silicone pressure sensitive adhesive according to any one of claims 9 to 11, wherein the adhesive has a wet-out time to glass of no greater than 10 seconds as measured according to the Glass Wet-Out Procedure, as disclosed in the description.

12. An adhesive article comprising first adhesive bonded to a first major surface of a substrate, wherein the first adhesive comprises the silicone pressure sensitive adhesive according to any one of claims 8 to 11.

**Patentansprüche**

1. Ein Verfahren zur Herstellung eines vernetzten Silicon-Haftklebstoffs, umfassend
Aufbringen einer Zusammensetzung, die ein nichtfunktionalisiertes Polysiloxanmaterial umfasst, auf ein Substrat, und
Vernetzen des nichtfunktionalisierten Polysiloxans durch Aussetzen der Zusammensetzung einer Elektronenstrahl-Bestrahlung,
wobei es sich bei dem nichtfunktionalisierten Polysiloxanmaterial um ein nichtfunktionalisiertes Polysiloxanöl mit einer dynamischen Viskosität von nicht mehr als 1.000.000 mPa•sec bei 25 °C handelt, und
wobei das nichtfunktionalisierte Polysiloxanmaterial die folgende Formel aufweist:

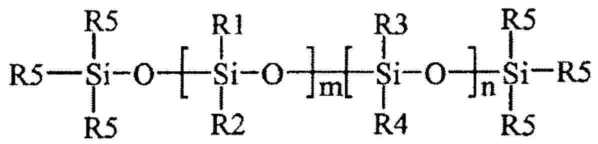 (1)

worin R1, R2, R3 und R4 unabhängig ausgewählt sind aus der Gruppe, bestehend aus einer Alkylgruppe und einer Arylgruppe, mindestens 90 % der R5-Gruppen Alkylgruppen sind, n und m ganze Zahlen sind und mindestens eines von m oder n nicht Null ist.

**2.** Das Verfahren nach Anspruch 1, wobei die Zusammensetzung eine Vielzahl von nichtfunktionalisierten Polysiloxanmaterialien umfasst.

**3.** Das Verfahren nach einem der vorstehenden Ansprüche, wobei die Zusammensetzung ein nichtfunktionalisiertes Polysiloxanöl mit einer dynamischen Viskosität von weniger als 600.000 mPa•sec bei 25 °C umfasst.

**4.** Das Verfahren nach einem der vorstehenden Ansprüche, wobei mindestens eines der nichtfunktionalisierten Polysiloxanmaterialien Fluor enthält.

**5.** Das Verfahren nach einem der vorstehenden Ansprüche, wobei es sich bei mindestens einem der nichtfunktionalisierten Polysiloxanmaterialien um ein Poly(dimethylsiloxan) oder ein aromatisches Siloxan handelt.

**6.** Das Verfahren nach einem der vorstehenden Ansprüche, wobei die Zusammensetzung im Wesentlichen frei von Katalysatoren und Initiatoren ist, wobei im Wesentlichen frei bedeutet, dass es keine wirksame Menge gibt und eine wirksame Menge eine Menge ist, die die Aushärtungszeit der Zusammensetzung um mindestens 10 % reduziert gegenüber der Aushärtungszeit für die gleiche Zusammensetzung bei den gleichen Aushärtungsbedingungen, ohne dass der Katalysator oder Initiator vorliegt.

**7.** Das Verfahren nach einem der vorstehenden Ansprüche, wobei die Zusammensetzung ferner mindestens eines aus Glasperlen und polymeren Mikrokugeln umfasst.

**8.** Ein Silicon-Haftklebstoff, umfassend eine elektronenstrahlvernetzte Zusammensetzung,
wobei die Zusammensetzung mindestens ein vernetztes, nichtfunktionalisiertes Polysiloxanmaterial umfasst,
wobei es sich bei dem nichtfunktionalisierten Polysiloxanmaterial um ein nichtfunktionalisiertes Polysiloxanöl mit einer dynamischen Viskosität von nicht mehr als 1.000.000 mPa•sec bei 25 °C handelt und
wobei das nichtfunktionalisierte Polysiloxanmaterial die folgende Formel aufweist:

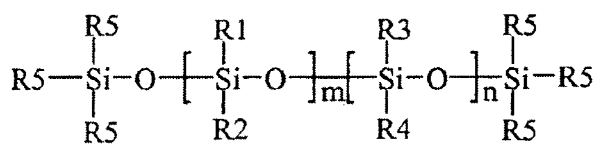 (1)

worin R1, R2, R3 und R4 unabhängig ausgewählt sind aus der Gruppe, bestehend aus einer Alkylgruppe und einer Arylgruppe, mindestens 90 % der R5-Gruppen Alkylgruppen sind, n und m ganze Zahlen sind und mindestens eines von m oder n nicht Null ist.

**9.** Der Silicon-Haftklebstoff nach Anspruch 9, wobei die Zusammensetzung im Wesentlichen frei von Katalysatoren und Initiatoren ist, wobei im Wesentlichen frei bedeutet, dass es keine wirksame Menge gibt und eine wirksame Menge eine Menge ist, die die Aushärtungszeit der Zusammensetzung um mindestens 10 % reduziert gegenüber der Aushärtungszeit für die gleiche Zusammensetzung bei den gleichen Aushärtungsbedingungen, ohne dass der Katalysator oder Initiator vorliegt.

**10.** Der Silicon-Haftklebstoff nach Anspruch 9, ferner umfassend mindestens eines aus Glasperlen und polymeren Mikrokugeln.

**11.** Der Silicon-Haftklebstoff nach einem der Ansprüche 9 bis 11, wobei der Klebstoff eine Benetzungszeit zum Glas von nicht mehr als 10 Sekunden aufweist, gemessen entsprechend dem Glass Wet-Out-Verfahren, wie in der

Beschreibung angegeben.

**12.** Ein Klebstoffartikel, umfassend einen ersten Klebstoff, der an eine erste Hauptoberfläche eines Substrats gebunden ist, wobei der erste Klebstoff den Silicon-Haftklebstoff nach einem der Ansprüche 8 bis 11 umfasst.

## Revendications

**1.** Procédé de fabrication d'un adhésif sensible à la pression réticulé à base de silicone comprenant
l'application d'une composition comprenant un matériau de polysiloxane non fonctionnalisé à un substrat et
la réticulation du polysiloxane non fonctionnalisé en exposant la composition à une irradiation par faisceau d'électrons,
dans lequel le matériau de polysiloxane non fonctionnalisé est une huile de polysiloxane non fonctionnalisé ayant une viscosité dynamique n'excédant pas 1 000 000 mPa•s à 25 °C, et
dans lequel le matériau de polysiloxane non fonctionnalisé a la formule suivante :

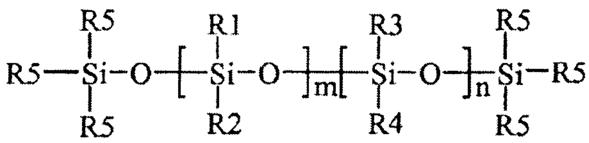

(1)

où R1, R2, R3 et R4 sont indépendamment choisis parmi le groupe constitué d'un groupe alkyle et d'un groupe aryle, au moins 90 % des groupes R5 sont des groupes alkyle, n et m sont des nombres entiers, et au moins l'un de m ou n n'est pas zéro.

**2.** Procédé selon la revendication 1, dans lequel la composition comprend une pluralité de matériaux de polysiloxane non fonctionnalisé.

**3.** Procédé selon l'une quelconque des revendications précédentes, dans lequel la composition comprend une huile de polysiloxane non fonctionnalisé ayant une viscosité dynamique inférieure à 600 000 mPa•s à 25 °C.

**4.** Procédé selon l'une quelconque des revendications précédentes, dans lequel au moins un des matériaux de polysiloxane non fonctionnalisé comprend du fluor.

**5.** Procédé selon l'une quelconque des revendications précédentes, dans lequel au moins un des matériaux de polysiloxane non fonctionnalisé est un poly(diméthyl-siloxane) ou un siloxane aromatique.

**6.** Procédé selon l'une quelconque des revendications précédentes, dans lequel la composition est essentiellement dépourvue de catalyseurs et d'initiateurs, dans lequel « essentiellement dépourvue » signifie qu'il n'y a aucune quantité efficace et une quantité efficace est une quantité qui réduit le temps de durcissement de la composition d'au moins 10 % par rapport au temps de durcissement pour la même composition aux mêmes conditions de durcissement en l'absence de ce catalyseur ou initiateur.

**7.** Procédé selon l'une quelconque des revendications précédentes, dans lequel la composition comprend en outre au moins un élément parmi des billes de verre et des microsphères polymères.

**8.** Adhésif sensible à la pression à base de silicone comprenant une composition réticulée par faisceau d'électrons, dans lequel la composition comprend au moins un matériau de polysiloxane non fonctionnalisé réticulé,
dans lequel le matériau de polysiloxane non fonctionnalisé est une huile de polysiloxane non fonctionnalisé ayant une viscosité dynamique n'excédant pas 1 000 000 mPa•s à 25 °C, et
dans lequel le matériau de polysiloxane non fonctionnalisé a la formule suivante :

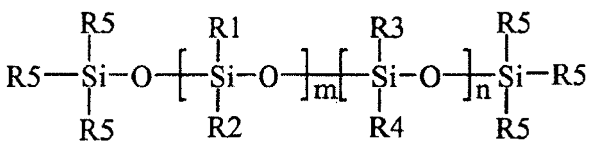

(1)

où R1, R2, R3 et R4 sont indépendamment choisis parmi le groupe constitué d'un groupe alkyle et d'un groupe aryle, au moins 90 % des groupes R5 sont des groupes alkyle, n et m sont des nombres entiers, et au moins l'un de m ou n n'est pas zéro.

**9.** Adhésif sensible à la pression à base de silicone selon la revendication 9, dans lequel la composition est essentiellement dépourvue de catalyseurs et d'initiateurs, dans lequel « essentiellement dépourvue » signifie qu'il n'y a aucune quantité efficace et une quantité efficace est une quantité qui réduit le temps de durcissement de la composition d'au moins 10 % par rapport au temps de durcissement pour la même composition aux mêmes conditions de durcissement en l'absence de ce catalyseur ou initiateur.

**10.** Adhésif sensible à la pression à base de silicone selon la revendication 9, comprenant en outre au moins l'un parmi des billes de verre et des microsphères polymères.

**11.** Adhésif sensible à la pression à base de silicone selon l'une quelconque des revendications 9 à 11, dans lequel l'adhésif a un temps d'imprégnation complète sur du verre n'excédant pas 10 secondes, tel que mesuré selon la procédure d'imprégnation complète de verre, telle que décrite dans la description.

**12.** Article adhésif comprenant un premier adhésif lié à une première surface principale d'un substrat, dans lequel le premier adhésif comprend l'adhésif sensible à la pression à base de silicone selon l'une quelconque des revendications 8 à 11.

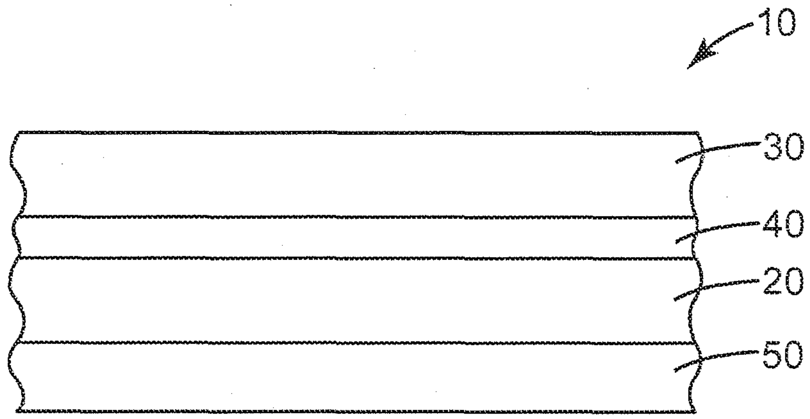


FIG. 1

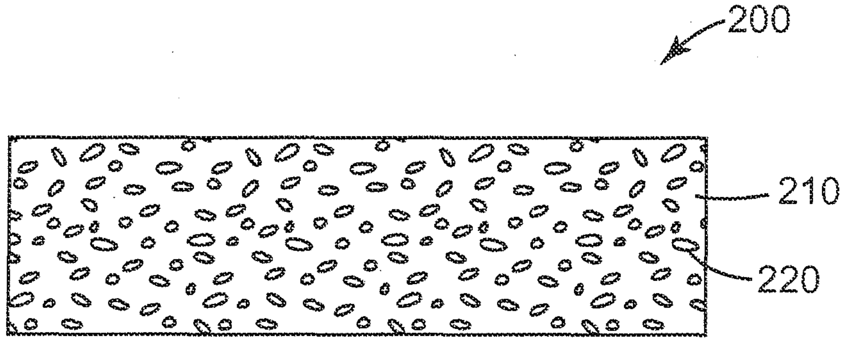


FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2009076389 A, Hao


### Non-patent literature cited in the description


- *CHEMICAL ABSTRACTS,* 63148-58-3